**Europäisches Patentamt**

**European Patent Office**

**Office européen des brevets**

(19)

(11) Publication number: **0 018 437**
**B1**

(12)                 **EUROPEAN PATENT SPECIFICATION**

(45) Date of publication of patent specification: **05.05.82**

(51) Int. Cl.³: **B 65 G 1/10**

(21) Application number: **79104217.9**

(22) Date of filing: **30.10.79**

(54) Improvements relating to a saddle for retrieving and returning drawers from and to a bank of such drawers.

(30) Priority: **27.04.79 IT 1256979**

(43) Date of publication of application:
**12.11.80 Bulletin 80/23**

(45) Publication of the grant of the patent:
**05.05.82 Bulletin 82/18**

(84) Designated Contracting States:
**AT BE CH DE FR GB LU NL SE**

(56) References cited:
**DE - A1 - 2 743 395**
**DE - C - 823 735**
**US - A - 2 707 666**

(73) Proprietor: **ISTITUTO GRAFICO BERTELLO S.p.A.**
**Via Piave No. 14**
**I-12011 Borgo San Dalmazzo (Cuneo) (IT)**

(72) Inventor: **Di Liddo, Natale**
**Via Rododendro No. 8**
**I-12011 Borgo San Dalmazzo (Cuneo) (IT)**

(74) Representative: **Ferrarotti, Giovanni**
**Via Alla Porta Degli Archi No. 1/7**
**I-16121 Genova (IT)**

Courier Press, Leamington Spa, England.

# Improvements relating to a saddle for retrieving and returning drawers from and to a bank of such drawers.

This invention relates to a drawer handling saddle for a drawer bank comprising a frame comprising alveoli respectively containing drawers having information, articles or the like therein, which has from time to time to be retrieved selectively to be examined, removed and replaced.

The type of drawer bank with which the saddle of the present invention is to be used is used in conjunction with two consultation locations for each saddle, such locations being adapted to receive individual drawers and serving as places for the examination of the drawer contents by personnel. It is usual for a saddle to be movable horizontally and vertically, under the influence of appropriate control circuits between two external parallel frameworks each defining alveoli containing many drawers in rows and columns. The saddle can therefore be considered as moving between two drawer stacks, a right and a left, and when a drawer has been extracted by the saddle, the saddle moves to the ends of the stacks where the said two consultation locations exist, one being at the right of the saddle, the other being to the left. Appropriate circuitry provides that the saddle discharges the drawer which it carries into the consultation location which is vacant if the other contains a drawer. The movements of the drawers onto the saddle are all in the same direction, referred to herein and in the claims as "the operational direction", which direction is at right angles to the vertical plane in which the saddle moves when transporting a drawer between the stacks of drawers. Such drawer banks will be referred to herein as drawer "banks of the type described".

There are known drawer retrieval systems in which the saddle is arranged to extract a drawer from a stack of drawers and place it in a consultation location at the same side of the saddle as the stack of drawers. Clearly, such a system is limited in that the saddle can only be operated when the consultation location is clear, and it must return each drawer back to the drawer bank before extracting another drawer for placement in the consultation location. With this system, which is not a drawer bank of the type described, there is considerable time wastage and idle time as the simultaneous consultation of two drawers is not possible.

Drawer banks of the type described are much preferred, because with such systems, it is possible to move a drawer, for example from a right hand stack of drawers to the consultation either on the same side, i.e. the right side of the saddle it is free, or to the opposite side, i.e. the left side of the saddle, and when a drawer has been placed in any consultational location, the saddle can immediately receive the drawer from the other consultation location to return same, or it can retrieve another drawer for placement in the other consultation location.

In the system in which the saddle can place a drawer only in a consultation location at the same side of the saddle as the stack of drawers, it is known to use various mechanical and magnetic hooking arrangements for interconnecting the drawer and saddle, the hooking means being movable by chains or endless screws. The hooking arrangement performs both the extraction from and insertion into the alveolus in the stack of drawers or the consultation location. A drawer handling saddle of this type is known from DE—A—2743395 in the name of the applicant, the saddle including flexible endless member means which is drivable in opposite directions and which has one or more reaches extending in the operational direction, provided with a hooking and displacing member connected to the endless member means for moving in a direction transverse to the operational direction into or out of hooking engagement with a hook formation on the drawer end, as the endless member means is driven and to displace the drawer out of the bank, into the bank or into or out of either of the consultation locations, as the hooking and displacing member travels along said reach or one of said reaches when the endless member means is driven appropriately.

The disadvantages of such an arrangement have already been described, and it should be mentioned that the hooking arrangement in fact makes impossible for the drawer to be moved off the saddle other than to the same side as the stack of drawers.

With the known arrangements of drawer banks of the type described, hooking devices are also used for the extraction and insertion of drawers from and into the drawer stacks and consultation locations, but the hooking devices must be of a nature to permit the drawers to pass onto the saddle from one side, and the over the saddle and be discharged from the other side thereof. The known hooking arrangements for such a system provide a double movable hook and two endless bands, and the drawers are adapted to be hooked at each end. The system operates in that a first hook engages an end of the drawer, and pulls the drawer partway onto the saddle, and thereafter the aforesaid hook is lowered enabling the drawer to be driven further onto the saddle by means of the endless bands which are driven. Before the drawer has completely crossed the saddle, the hook is once more lifted and it engages in hooking relationship with the other end of the drawer to push it off the saddle at the opposite side, so that a drawer which moves on to a saddle at one side can be discharged onto a consultation location at the other side of the saddle. The aforesaid motions are reversible, so that each drawer can be returned to its alveolus from either consultation location.

Examples of the drawer banks of the type described are disclosed in U.S. Patents 3883008 and 3999823.

Whilst the known drawer bank systems of the type described operate satisfactorily, they do have certain inconveniences. A particular inconvenience arises because of the complex nature of the hooking arrangement and the provision of drivebands. The raising and lowering of the hook arrangements is now always satisfactory. A further inconvenience is that it is difficult to locate a drawer accurately in relation to the saddle by means of endless drivebands, and the drawer can become mis-aligned as it moves across the saddle. If any such mis-alignment is significant, then significant damage can be imparted to the equipment.

Furthermore, because there are two types of driving of the drawer, i.e. hooks and endless bands, there is more possibility of equipment failure.

The present invention seeks to provide a saddle for use with a drawer bank of the type described, which will be of much simpler construction and will operate more reliably, and according to the present invention in its broadest aspect there is provided a drawer handling saddle, for use with a bank of drawers of the type described, said saddle including endless member means comprising two chains, each of which is supported by sprocket wheels, and each of which is provided with a hooking and displacing member, the chains defining similar paths but being staggered in the operational direction so that the chains become left and right hand chains, and the right and left hand chains respectively are adapted to extract and insert drawers from and into a stack of drawers of the band to the right and left of the saddle and to extract and insert drawers from and into a consultation location to the right and left of the saddle, and the chains can work in co-operation to move drawers from stacks of drawers to the right and left of the saddle to consultation locations respectively to the left and right of the saddle and vice versa.

In a specifically preferred construction, each of the chains is supported by four sprocket wheels lying at the corners of a rectangle so that each chain defines two long reaches extending in the operational direction and two short reaches extending in a direction transverse to the operational direction, and of the sprockets supporting each chain, one is drivable in forward and reverse directions by a drive means.

The motion of the hooking and displacing member of each chain along the two shorter reaches provides a means for the hooking and unhooking of the drawers, whilst the motion of the said member along one of the longer reaches provides the displacing movement of the drawer.

By the solution of the invention, the saddle becomes extremely simple, and hooking systems which require to be raised and lowered in operation are no longer necessary. Furthermore the driven endless bands of the known drawer banks of the type described are eliminated. The centring of the drawer on the saddle becomes mechanically simple, and can be achieved by the provision of suitable guides on the saddle. Thereby, misalignment of a drawer when on or travelling across the saddle is avoided.

The present invention also provides a drawer bank of the type described including a saddle as aforesaid.

An embodiment of the present invention will now be described, by way of example, with reference to the accompanying drawings, wherein:-

Fig. 1 shows a plan view of the elements of a saddle significant to the embodiment of the invention;

Fig. 2 shows a side view of those elements of the saddle illustrated in Fig. 1; and

Figs. 3 to 8 show, in a series of sequential steps, how the saddle of which the operative elements are shown in Figs. 1 and 2 handles a drawer which has to be taken from the stack of drawers at one side of the saddle and placed in a consultation location on the other side of the saddle.

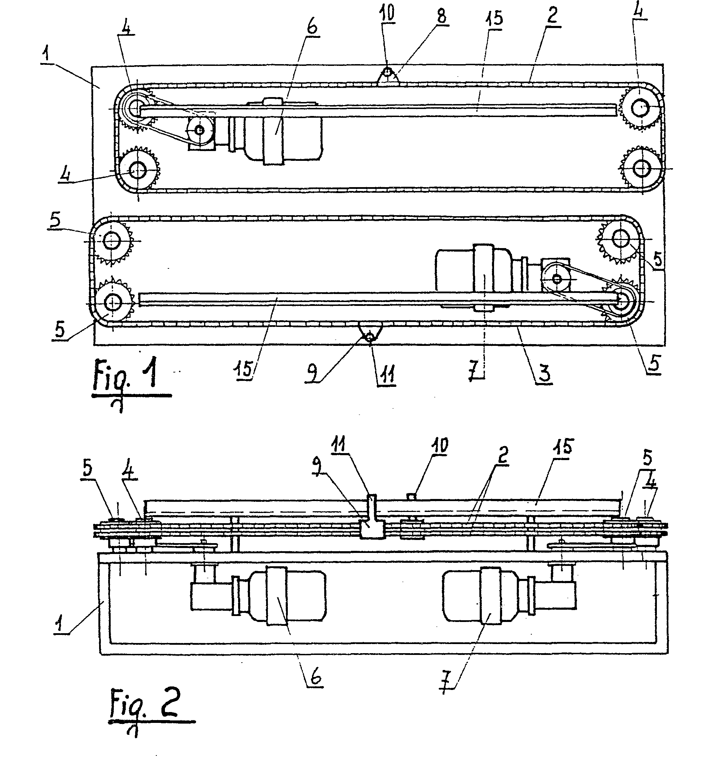

Referring to the drawings, in Figs. 1 and 2, the saddle frame or chassis is indicated by Ref. No. 1, and it is provided with well known control devices (not shown) for enabling the saddle to move, on command, in horizontal and vertical directions between two stacks of drawers contained in alveoli. The chassis carries two endless chains 2 and 3, which lie in the same horizontal plane, and each is supported by four gear wheels or sprockets 4 and 5 respectively. One of the gear wheels 4 is drivable in forwards and reverse direction by means of a drive motor and reduction gear unit 6, and one of the wheels 5 is drivable by a unit 7 which is similar to the unit 6. The wheels 4 and 5 respectively are arranged at the corners of a rectangle so that of each chain 2 and 3 it defines two long reaches and two short reaches. The chains 2 and 3 are arranged so that the long reaches are parallel, but the chains 2 and 3 are staggered in the direction of the long reaches, which is also the operational direction so that in fact one chain 2 becomes the chain for extracting drawers from the right of the saddle in Fig. 1, whilst chain 3 becomes the chain for extracting drawers from the stack to the left of the saddle in Fig. 1.

Each chain 2 and 3 is in fact a double chain and carries a cantilever arm 8 and 9. At the end of each arm 8 and 9 is an upstanding pin 10 and 11. Each pin 10 and 11 may in fact be defined by a rotatable member, rotatably mounted on the cantilever arm 8 and 9.

The length of the long reaches of the endless chains, and the staggering of the chains are dimensions which are related to the length of each drawer 12 to be handled by the saddle. Each drawer 12 in fact is provided at each end with a downwardly open C-shaped channel member 13. The staggering of the chains 2 and 3, and the length of the longer reaches are such that when a drawer sits centrally on the saddle, the pivot pin 10 can enter the downwardly open C-shaped member 14 at the left hand end of the drawer, whilst the pivot pin 11 can enter the downwardly open C-shaped member 13 at the other end of the drawer. This is important in enabling the two chains to co-operate to discharge drawers from the saddle towards either side of the saddle. The saddle is furthermore provided with guides 15, which extend in the operational direction, such guides being angle irons for receiving and guiding the edges of a drawer carried by the saddle to ensure that the drawer is properly aligned when being placed in a consultation location or in an alveolus of a drawer stack.

When it is borne in mind that the chains 2 and 3 can be driven selectively under the command of an operator controlling the appropriate control circuitry, and that the saddle can move vertically and horizontally between the stacks of drawers and to a position between the consultation locations, it is believed that the operation of the saddle so far described will be understood but nevertheless we would like to describe one particular operation of extraction of the drawer from an alveolus to one side of the saddle and the insertion of that drawer in a consultation location at the other side of the saddle.

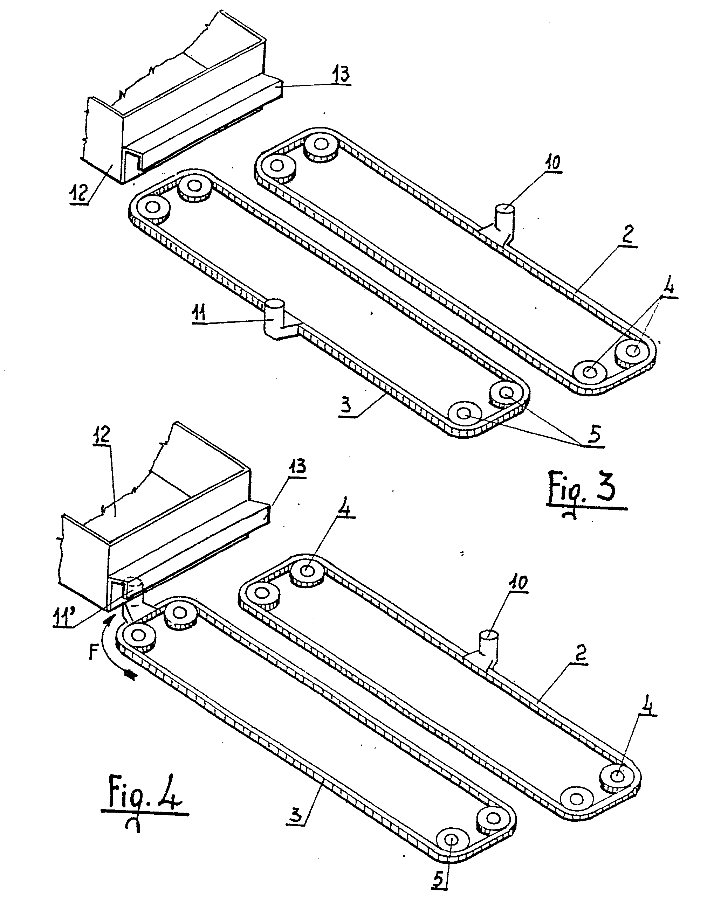

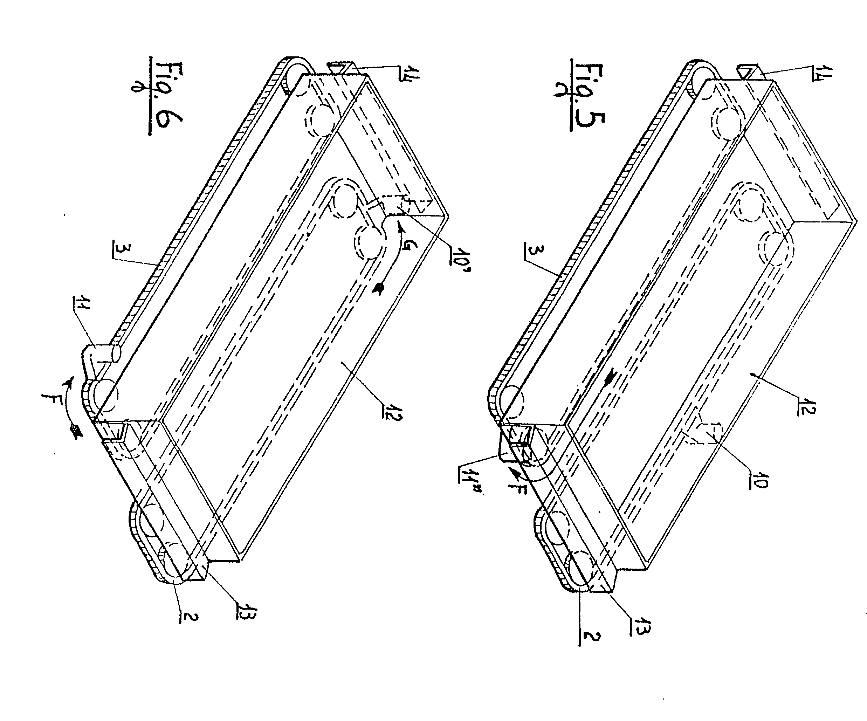

For this purpose, reference is now made to Figs. 3 to 8, and in these Figs. only the chains 2 and 3 and the pivot pins 10, 11 of the saddle are shown in conjunction with the drawer to be moved. In Fig. 3 the drawer is shown in an alveolus to the left hand side of the saddle, the saddle having been appropriately positioned in relation to the said drawer 12 by appropriate commands from the person wishing extraction of the drawer. In the first stage of the operation, the unit 7 is driven to move the pivot pin 11 in the direction of arrow F as shown in Fig. 4, so that the said pin 11 enters the downwardly open C-shaped channel 13 as shown at 11' in Fig. 4. Continued driving of the unit 7 causes the pivot 11 to move on the inner longer reach of the chain 3, continuing in the direction of arrow F as shown in Fig. 5, so that in fact the movement of the pin to a position shown at 11'' in Fig. 5 effects extraction of the drawer 12 from the alveolus, and the drawer 12 is positioned on the saddle, the positioning being controlled by the guides 15. The unit 7 continues to drive and the pin 11 moves in the direction of arrow F as shown in Fig. 6 until pin 11 leaves the C-shaped channel 13 and it stops when it reaches the position shown in Fig. 3. It will be noticed that the outer longer reach of the chain 3 lies outside the drawer 12. The same applies to the outer reach of chain 2, which chain during the above-mentioned movements has been stationary, and the pivot 10 has therefore not interfered with the placement of the drawer on the saddle.

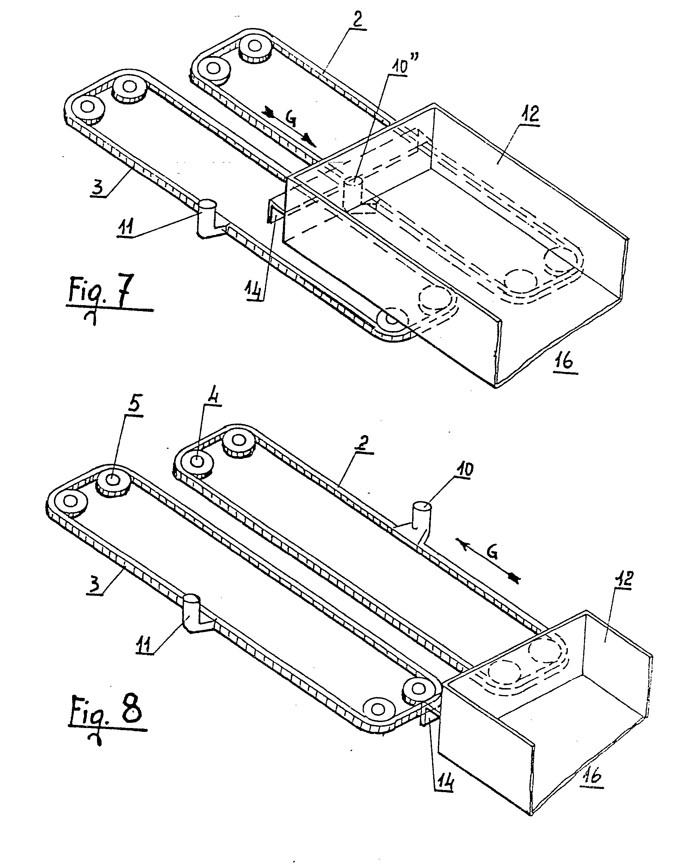

With the drawer 12 supported on the saddle, the saddle moves to the appropriate position between the consultation locations, and it is to be mentioned that the drawer is so positioned on the saddle that the pivot 10 can be received in the downwardly open channel 14 at the other end of the drawer. To discharge the drawer into the right-hand consultation 16 as shown in Figs. 7 and 8, the chain 2 is now driven by the unit 6 in a direction to move the pivot 10 as shown by arrow G in Figs. 6, 7 and 8. In Fig. 6 the pivot is shown at 10' as entering the channel 14, whilst Fig. 7 shows the pivot at a position 10'' half way along the inner longer reach of the chain 2 so that in fact the drawer is shown as being halfway discharged into the consultation location 16. Fig. 8 shows the drawer 12 in the consultation location 16, and also shows that the pivot 10 has left the channel 14, completing the transferal operation. If the drawer 12 is to be returned to its alveolus, the procedure above described is repeated. When the drawer 12 has been placed in the consultation location, the saddle can then move off and extract another drawer either from the right of left hand stack of drawers. If a drawer is extracted from the right hand stack of drawers, the extraction is performed by the chain 2 and its pivot pin 10, and the placement of such a drawer in the other consultation location would be performed by the chain 3 and the pin 11.

It can be seen that an extremely simple system has been provided for the handling of drawers which are arranged in vertically parallel stacks in alveoli. The chains are in staggered relationship in order that it is not necessary for the saddle to move in operational direction which simplifies the control system therefor. With the arrangement described of course the staggering, the drawer sizes and the spacing between the stacks of drawers are critical dimensions.

Although the apparatus described is specifically for use with two vertical stacks, it is not necessary that two vertical stacks of drawers be provided, as a single saddle could operate with a single stack of drawers serving two consultation locations.

Furthermore, although each chain is shown as being supported by four sprockets, this is not essential, and the same effect can be achieved using two sprockets.

**Claims**

1. A drawer handling saddle for use with a bank of drawers (12) of the type described, said saddle including flexible endless member means (2, 3) which is drivable in opposite directions, which has one or more reaches extending in the operational direction, and which is provided with a hooking and displacing member (10, 11) connected to the endless member means (2, 3) for moving in a direction transverse to the operational direction into or out of hooking engagment with a hook formation (13) on the drawer end, as the endless member means (2, 3) is driven and to displace the drawer (12) out of the bank, into the bank or into or out of the consultation location, as the hooking and displacing member (10, 11) travels along said reach or one of said reaches when the endless member means (12) is driven appropriately, characterised in that said endless member means comprises two chains (2, 3) each of which is supported by sprocket wheels (4, 5) and each of which is provided with a hooking and displacing member (10, 11), the chains (2, 3) defining similar paths but being staggered in the operational direction so that the chains become left and right hand chains and the right and left hand chains respectively are adapted to extract and insert drawers (12) from and into a stack of drawers of the bank to the right and left of the saddle and to extract and insert drawers (12) from and into a consultation location to the right and left of the saddle, and the chains (2, 3) can work in co-operation to move drawers from stacks of drawers to the right and left of the saddle to consultation locations respectively to the left and right of the saddle and vice versa.

2. A saddle as claimed in Claim 1 characterised in that each of the chains (2, 3) is supported by four sprocket wheels (4, 5) lying at the corners of a rectangle so that each chain defines two long reaches extending in the operational direction and two short reaches extending in a direction transverse to the operational direction and of the sprockets supporting each chain, one is drivable in forwards and reverse directions by a drive means (6, 7).

3. A saddle as claimed in any preceding claim, characterised in that the saddle has guide means (15) extending in the operational direction which cooperates with a drawer on the saddle to locate the drawer in pre-determined position on the saddle.

4. A drawer bank of the type described and a saddle according to any one of the preceding claims, said saddle being adapted to move, under control between left and right hand vertical stacks of drawers so that the saddle can selectively extract drawers from and insert drawers into said stacks, and to extract drawers from and insert drawer into right and left consultation locations, characterised in that said drawers (12) have hook formations (13, 14) at both ends for engagement by the hooking and displacing members (10, 11) of the endless member means (2, 3).

**Revendications**

1. Chariot traitant un tiroir pour utilisation avec un batterie de tiroirs (12) du type décrit, ce chariot comprenant un moyen souple d'entraînement sans fin (2, 3) qui peut être actionné dans des directions opposées, qui possède une ou plusieurs portées se développant dans la direction opérationnelle et qui est muni d'un bras d'accrochage et de déplacement (10, 11) relié au moyen d'entraînement sans fin (2, 3) pour cheminer en direction transversale par rapport à la direction opérationnelle en engagement d'accrochage ou de décrochage avec une formation de crochet (13) à l'extrémité du tiroir, lorsque le moyen d'entraînement sans fin (2, 3) est actionné et pour déplacer le tiroir (12) hors de la batterie, ou à l'intérieur de celle-ci ou dans le poste de consultation ou hors de celui-ci, lorsque le bras d'accrochage et de déplacement (10, 11) chemine le long de cette portée ou de l'une de ces portées, quand le moyen d'entraînement sans fin (2, 3) est entraîné convenablement, caractérisé par le fait que ce moyen d'entraînement sans fin comprend deux chaînes (2, 3), chacune d'elles étant supportée par des pignons de chaîne (4, 5) et étant munie d'un bras d'accrochage et de déplacement (10, 11), les chaînes (2, 3) délimitant des chemins similaires mais étant décalées dans la direction opérationnelle de sorte qu'elles deviennent des chaînes gauche et droite et les chaînes droite et gauche respectivement sont adjustées pour extraire et intégrer des tiroirs (12) provenant des piles de tiroirs de la batterie à droite et à gauche du chariot ou y retournant et pour extraire et intégrer des tiroirs (12) provenant d'un poste de consultation à droite et à gauche du chariot ou y allant et les chaînes (2, 3) peuvent travailler en coopération pour déplacer des tiroirs des piles de tiroirs vers la droite et la gauche du chariot jusqu'aux postes de consultation respectivement vers la gauche et la droite du chariot et vice versa.

2. Chariot suivant la Revendication 1, caractérisé par le fait que chacune des chaînes (2, 3) est supportée par quatre pignons de chaîne (4, 5), situés aux angles d'un rectangle, de telle sorte que chaque chaîne délimite deux longues portées se développant dans la direction opérationnelle et deux portées courtes se développant dans une direction transversale par rapport à la direction opérationnelle, et que dans les pignons supportant chaque chaîne, l'un d'eux est actionnable en direction avant et arrière par un moyen de commande (6, 7).

3. Chariot suivant l'une quelconque des revendications précédentes, caractérisé par le fait qu'il comporte des moyens de guidage (15) se prolongeant dans la direction opérationnelle, avec lesquels coopère un tiroir sur le chariot pour localiser le tiroir en position prédéterminée sur le chariot.

4. Batterie de tiroirs du type décrit et chariot selon l'une quelconque des revendications précédentes, ce chariot étant adapté pour se déplacer, sous contrôle, entre des piles verticales de tiroirs à droite et à gauche, de telle manière que le chariot peut sélectivement extraire des tiroirs de ces piles et insérer des tiroirs dans ces piles et pour en extraire des tiroirs et insérer un tiroir dans les postes de consultation de droite et de gauche, caractérisé par le fait que ces tiroir (12) ont à leurs deux extrémités des formations de crochet (13, 14) pour engagement par les bras d'accrochage et de déplacement (10, 11) du moyen d'entraînement sans fin (2, 3).

## Patentansprüche

1. Schubladenmanövriersattel zur Verwendung bei einer Gruppe von Schubladen (12) der genanten Art, enthaltend eine flexible, in entgegengesetzten Richtungen antreibbare Endlosorgan-Einrichtung (2, 3), die einen oder mehrere sich in Betätigungsrichtung erstreckende Abschnitte aufweist und die mit einem, mit der Endlosorgan-Einrichtung (2, 3) verbundenen Haken- und Verschiebeelement (10, 11) versehen ist, für eine quer zur Betätigungsrichtung verlaufende Richtung in einen und aus einem Einhak-Eingriff mit einer Hakenausbildung (13) am Schubladenende, wenn die Endlosorgan-Einrichtung (2, 3) angetrieben ist, und um die Schublade (12) aus der Gruppe heraus, in die Gruppe hinein oder in die oder aus der Konsultationsstelle zu verschieben, wenn das Haken- und Verschiebeelement (10, 11) bei entsprechendem Antrieb der Endlosorgan-Einrichtung entlang dem Abschnitt oder einem der Abschnitt bewegt wird, dadurch gekennzeichnet, daß die Endlosorgan-Einrichtung zwei Ketten (2, 3) enthält, von denen jede von Kettenrädern (4, 5) getragen wird und mit einem Haken- und Verschiebeelement (10, 11) versehen ist, wobei die Ketten (2, 3) gleiche Bahnen bilden, die jedoch in Betätigungsrichtung versetzt sind, so daß linke und rechte Ketten vorhanden sind und diese linken und rechten Ketten so ausgebildet sind, daß Schubladen (12) aus einem Schubladenstapel der Gruppe nach links und rechts heraus und in den Stapel hinein sowie nach links und rechts des Sattels aus einer Konsultationsstelle heraus und in eine Konsultationsstelle hinein verschiebbar sind, und daß die Ketten (2, 3) derart zusammenwirken können, daß die Schubladen von den Schubladenstapeln rechts und links des Sattels zu den Konsultationsstellen nach der linken bzw. rechten Seite des Stapels und umgekehrt bewegt werden.

2. Sattel nach Anspruch 1, dadurch gekennzeichnet, daß jede Kette (2, 3) von vier Kettenrädern (4, 5) getragen wird, die an den Ecken eines Rechtecks liegen, so daß jede Kette zwei sich in Betätigungsrichtung erstreckende lange Abschnitte und zwei sich quer zur Betätigungsrichtung erstreckende kurze Abschnitt aufweist, und daß von den je eine Kette tragenden Kettenrädern eines in Vorwärts- und Rückwärtsrichtung durch eine Antriebseinrichtung (6, 7) antreibbar ist.

3. Sattel nach einem der vorhergehenden Ansprüche, dadurch gekennzeichnet, daß der Sattel eine Führungseinrichtung (15) aufweist, die sich in Betätigungsrichtung erstreckt und mit einer Schublade auf dem Sattel zusammenwirkt, um die Schublade in einer vorbestimmten Position auf dem Sattel anzuordnen.

4. Schubladen gruppe der oben beschriebenen Art und Sattel nach einem der vorhergehenden Ansprüche, wobei der Sattel so ausgebidlet ist, daß er unter einer Steuerung zwischen links und rechts angeordneten vertikalen Schubladenstapeln bewegbar ist, so daß der Sattel wahlweise Schubladen aus diesen Stapeln heraus und in diese Stapel hinein sowie Schubladen aus linken und rechten Konsultationsstellen heraus und in linke und rechte Konsultationsstellen hinein verschieben kann, dadurch gekennzeichnet, daß die Schubladen (12) an beiden Enden Hakenausbildungen (13, 14) für einen Eingriff mit dem Haken- und Verschiebeelement )10, 11) der Endlosorgan-Einrichtung (2, 3) aufweisen.

0 018 437

Fig. 1

Fig. 2

1

Fig. 3

Fig. 4

Fig. 5

Fig. 6

Fig. 7

Fig. 8